# EUROPÄISCHE PATENTANMELDUNG

(11) **EP 2 123 683 A1**
(43) Veröffentlichungstag der Anmeldung: **25.11.2009**
(21) Anmeldenummer: 08009227.3
(22) Anmeldetag: 20.05.2008
(51) Int. Cl.: C08F 2/30, B01F 17/42

(54) **Verwendung nichtionischer Tenside als Emulgatoren für die Emulsionspolymerisation**

(71) Anmelder: Cognis IP Management GmbH, 49589 Düsseldorf (DE)
(72) Erfinder: Klagge, Ronald, Dr., 40699 Erkrath (DE); Scherer, Markus, 50733 Köln (DE); Schliwka, Thomas, 51427 Bergisch Gladbach (DE); Hömberg, Katharina, 40723 Hilden (DE); Held, Uwe, 42553 Velbert (DE); Mausberg, Thomas, 42781 Haan (DE)

(57) **Zusammenfassung**

Verwendung von nichtionischen Tensiden als Emulgatoren für die Emulsionspolymerisation, wobei man diese nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

## Beschreibung

### Gebiet der Erfindung

Die Erfindung betrifft die Verwendung spezieller schaumschwacher Tenside als Emulgatoren für die Emulsionspolymerisation, ferner die unter Verwendung dieser Tenside herstellbaren schaumschwachen Polymerdispersionen sowie ein Verfahren zur Herstellung dieser schaumschwachen Polymerdispersionen.

### Stand der Technik

Bei der Emulsionspolymerisation handelt es sich um ein spezielles Verfahren der Polymerisation, bei dem gering wasserlösliche Monomere mit Hilfe von Emulgatoren in Wasser emulgiert und unter Verwendung wasserlöslicher Initiatoren wie Kaliumperoxodisulfat oder Redoxinitiatoren polymerisiert werden. Anionische und/oder nichtionische Tenside sind hierbei die wesentlichen Bestandteile. Über den Mizellaufbau in der wässrigen Lösung gewährleisten sie den Prozess der Emulsionspolymerisation.

Im Verlaufe von Emulsionspolymerisationsprozessen tritt in der Regel eine starke Schaumbildung auf, insbesondere nach dem Ende des Polymerisationsprozesses, wenn eine Abtrennung von nicht umgesetztem Restmonomer durch Abstrippen im Vakuum erfolgt. Um diesen - meist unerwünschten - Schaum wirksam zu bekämpfen, d.h. ihn zu einem raschen Zerfall zu bewegen, werden häufig Entschäumer eingesetzt, die jedoch Auswirkungen auf die Qualität des entstehenden Latex haben.

### Beschreibung der Erfindung

Der vorliegenden Erfindung lag die Aufgabe zugrunde, Verbindungen bereitzustellen, die sich (allein oder in Abmischung mit anderen Verbindungen) als Emulgatoren für die Emulsionspolymerisation eignen. Bei der Verwendung als Emulgatoren für die Emulsionspolymerisation sollten diese Verbindungen insbesondere bewirken, dass nur eine geringe Koagulatbildung erfolgt.

Eine weitere Aufgabe, die durch die zu entwickelnden Emulgatoren gelöst werden sollte, bestand darin, Schaum, der im Verlaufe von Emulsionspolymerisations-Prozessen auftritt, wirksam zu bekämpfen, worunter insbesondere zu verstehen ist, dass auftretender Schaum rasch zerfällt; ferner Schaum, der nach dem Ende des Polymerisationsprozesses dann in unerwünschter Weise häufig auftritt, wenn eine Abtrennung von nicht umgesetztem Restmonomer durch Abstrippen im Vakuum erfolgt.

Gegenstand der vorliegenden Erfindung ist zunächst die Verwendung von nichtionischen Tensiden als Emulgatoren für die Emulsionspolymerisation, **dadurch gekennzeichnet, dass** man diese nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

Ein weiterer Gegenstand der vorliegenden Erfindung ist ein Verfahren zur Herstellung wäßriger Latices durch Emulsionspolymerisation, wobei man als Emulgatoren ein oder mehrere Tenside einsetzt, die ausgewählt sind aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

In einer Ausführungsform des erfindungsgemäßen Verfahrens setzt man als Emulgatoren neben ein oder mehreren Tensiden aus der Gruppe der Verbindungen (a) und (b) als weitere Emulgatoren zusätzlich ein oder mehrere Tenside ein, die ausgewählt sind aus der Gruppe
(c) der Verbindungen der Formel R¹-O-X-R², wobei X ein Segment bedeutet, das aus 1 bis 40 miteinander verknüpften Ethylen- und/oder Propylenoxideinheiten aufgebaut ist und worin die Reste R¹ und R² unabhängig voneinander Alkylreste mit 1 bis 20 C-Atomen bedeuten, die jeweils gesättigt oder ungesättigt, geradkettig oder verzweigt sein können, mit der Maßgabe, dass die Reste R¹ und R² keine Allylreste sind,
(d) der Verbindungen der Formel R³-O-X-H, wobei X ein Segment bedeutet, das aus 1 bis 40 miteinander verknüpften Ethylen- und/oder Propylenoxideinheiten aufgebaut ist und worin R³ einen Alkylrest mit 1 bis 20 C-Atomen bedeutet, der gesättigt oder ungesättigt, geradkettig oder verzweigt sein kann, mit der Maßgabe, dass R³ kein Allylrest ist, und
(e) der Verbindungen der Formel H-O-X-H, wobei X ein Segment bedeutet, das aus 1 bis 40 miteinander verknüpften Ethylen- und/oder Propylenoxideinheiten aufgebaut ist.

Die Verbindungen (a) bis (e) enthalten jeweils ein Segment, das aus 1 bis 40 miteinander verknüpften Ethylenoxideinheiten (EO) und/oder Propylenoxideinheiten (PO) aufgebaut ist. Dieses Segment kann entweder ausschließlich EO- oder ausschließlich aus PO-Einheiten aufgebaut sein. Es ist aber auch möglich, dass es sowohl aus EO- als auch aus PO-Einheiten besteht; in diesem Falle können die EO- bzw. PO-Einheiten statisctisch verteilt sein oder blockweise vorliegen. Die Synthese der Verbindungen (a) bis (e) kann nach allein dem Fachmann einschlägig bekannten Methoden erfolgen. Insbesondere gelten für die Einführung der EO/PO-Segmente die üblichen Techniken der Ethoxylierung bzw. Propoxylierung: Diese erfolgen in der Regel bei erhöhter Temperatur und erhöhtem Druck in Gegenwart von geeigneten Alkoxylierungskatalysatoren. Die Wahl des Alkoxylierungskatalysators beeinflußt dabei die sogenannte Homologenverteilung. So wird in Gegenwart der katalytisch wirkenden Alkalimetallalkoholate wie Natriumethylat eine breite Homologenverteilung erzielt, während beispielsweise in Gegenwart von Hydrotalcit als Katalysator eine stark eingeengte Homologenverteilung (sogenannte "narrow range"-Produkte) erzielt wird.

### Zu den Verbindungen (a)

Bei den Verbindungen (a) handelt es sich um Anlagerungsprodukte von 1 bis 40 mol Ethylen- und/oder Propylenoxid pro mol an Allylalkohol.

### Zu den Verbindungen (b)

Bei den Verbindungen (b) handelt es sich um Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

### Zu den Verbindungen (c)

Bei den Verbindungen (c) handelt es sich um Verbindungen der Formel R¹-O-X-R², wobei X ein Segment bedeutet, das aus 1 bis 40 miteinander verknüpften Ethylen- und/oder Propylenoxideinheiten aufgebaut ist und worin die Reste R¹ und R² unabhängig voneinander Alkylreste mit 1 bis 20 C-Atomen bedeuten, die jeweils gesättigt oder ungesättigt, geradkettig oder verzweigt sein können, mit der Maßgabe, dass die Reste R¹ und R² keine Allylreste sind.

### Zu den Verbindungen (d)

Bei den Verbindungen (d) handelt es sich um Verbindungen der Formel R³-O-X-H, wobei X ein Segment bedeutet, das aus 1 bis 40 miteinander verknüpften Ethylen- und/oder Propylenoxideinheiten aufgebaut ist und worin R³ einen Alkylrest mit 1 bis 20 C-Atomen bedeutet, der gesättigt oder ungesättigt, geradkettig oder verzweigt sein kann, mit der Maßgabe, dass R³ kein Allylrest ist.

### Zu den Verbindungen (e)

Bei den Verbindungen (d) handelt es sich um Verbindungen der Formel H-O-X-H, wobei X ein Segment bedeutet, das aus 1 bis 40 miteinander verknüpften Ethylen- und/oder Propylenoxideinheiten aufgebaut ist.

Die erfindungsgemäß einzusetzenden Verbindungen aus der Gruppe (a) und (b) - gewünschtenfalls in Kombination mit Verbindungen aus der Gruppe (c), (d) und (e) - können als alleinige Emulgatoren (Primäremulgatoren) bei der Emulsionspolymerisation eingesetzt werden. Es ist jedoch auch möglich, sie zusammen mit ein oder mehreren anionaktiven, kationischen oder (weiteren, von den Verbindungen (a) bis (e) verschiedenen) nichtionischen Emulgatoren einzusetzen.

In einer bevorzugten Ausführungsform setzt man die erfindungsgemäßen nichtionischen Emulgatoren in Kombination mit anionischen Emulgatoren ein, insbesondere solchen, die ausgewählt sind aus der Gruppe der dem Fachmann bekannten Fettalkoholsulfate, Fettalkoholethersulfate, Sulfosuccinate, Alkylarylsulfonate, Alkylarylethersulfate, Alkylsulfate, Fettsäuresulfonate, Phosphatester, Olefinsulfate, Alkansulfonate, α-Sulfomonocarbonsäureester.

Die im Zuge des erfindungsgemäßen Verfahrens einzusetzenden Emulgatoren der Gruppe (a) und (b) - gewünschtenfalls in Kombination mit Verbindungen aus der Gruppe (c), (d) und (e) - werden - sofern sie während der Emulsionspolymerisation zugesetzt werden - in einer Menge von 0,5 bis 10 Gew.-%, vorzugsweise von 1 bis 5 Gew.-% und insbesondere von 1 bis 3 Gew.-% - die Gew.-%-Angaben sind jeweils bezogen auf die Gesamtmenge der bei der Emulsionspolymerisation eingesetzten Monomeren - eingesetzt.

Es kann aber auch gewünscht sein, die Emulsionspolymerisation in Gegenwart anderer Emulgatoren, die man insbesondere aus der Gruppe nichtionischer und/oder anionischer Tenside wählt, durchzuführen und ein oder mehrere Emulgatoren der Gruppe (a) und (b) - gewünschtenfalls in Kombination mit Verbindungen aus der Gruppe (c), (d) und (e) - erst nach Abschluss der Polymerisation den fertigen Latices zuzudosieren, wo sie dann im Sinne einer Nachstabilisierung der wäßrigen Latices wirken.

In einer weiteren Ausführungsform setzt man die Verbindungen der Gruppe (a) und (b) - gewünschtenfalls in Kombination mit Verbindungen aus der Gruppe (c), (d) und (e) - sowohl während der Emulsionspolymerisation, als auch nach der Emulsionspolymerisation ein. Dabei kann es gewünscht sein, die Verbindungen der Gruppe (a) und (b) - gewünschtenfalls in Kombination mit Verbindungen aus der Gruppe (c), (d) und (e) - in Mischung mit anderen Tensiden einzusetzen oder als alleinige Tenside. In einer Variante beginnt man die Emulsionspolymerisation in Gegenwart klassischer anionischer Tenside oder Mischungen klassischer anionischer und nichtionischer Tenside und setzt dann ein oder mehrere Emulgatoren der Gruppe (a) und (b) - gewünschtenfalls in Kombination mit Verbindungen aus der Gruppe (c), (d) und (e) - gegen Ende der Emulsionspolymerisation und zusätzlich nach dem Abschluß der Polymerisation ein; in dieser Variante wirken die Emulgatoren der Gruppe (a) und (b) - gewünschtenfalls in Kombination mit Verbindungen aus der Gruppe (c), (d) und (e) - zum einen als Emulgatoren während der Emulsionspolymerisation und zum anderen im Sinne einer Nachstabilisierung der wäßrigen Latices.

Zur Nachstabilisierung setzt man die Verbindungen der Gruppe (a) und (b) - gewünschtenfalls in Kombination mit Verbindungen aus der Gruppe (c), (d) und (e) - unabhängig davon, ob sie auch schon während der Emulsionspolymerisation eingesetzt werden in einer Menge von 0,1 bis 10 Gew.-%, vorzugsweise von 0,1 bis 5 Gew.-% und insbesondere von 0,1 bis 3 Gew.-% - die Gew.-%-Angaben sind jeweils bezogen auf die Gesamtmenge der bei der Emulsionspolymerisation eingesetzten Monomeren - ein.

Die Natur der Polymeren und Copolymeren in den wäßrigen Latices unterliegt an sich keinen besonderen Beschränkungen. Besonders bevorzugt sind jedoch Polymere bzw. Copolymere auf Basis folgender Monomer-Bausteine: Acrylsäure, Acrylsäureester, Butadien, Methacrylsäure, Methacrylsäureester, Styrol, Vinylacetat und Versaticsäurevinylester.

In einer bevorzugten Ausführungsform wählt man die erfindungsgemäß als Emulgatoren einzusetzenden Tenside aussschließlich aus den Verbindungen der Klasse (a).

In einer weiteren bevorzugten Ausführungsform wählt man die erfindungsgemäß als Emulgatoren einzusetzenden Tenside ausschließlich aus den Verbindungen der Klasse (b).

Ein weiterer Erfindungsgegenstand sind wäßrige Polymerdispersionen, erhältlich nach dem oben beschriebenen erfindungsgemäßen Verfahren.

### Beispiele

### Eingesetzte Substanzen:

**FA-30EO**: Anlagerungsprodukt von 30 mol Ethylenoxid an einen Fettalkohol (Disponil LS 30, Fa. Cognis)
**Breox I**: Ethylenoxid-Anlagerungsprodukt an Allylalkohol (Breox AA E 450 H, Fa. Cognis)
**Breox II:** Polyethylenglykol 400 (Fa. Merck)
**Disponil A 3065:** modifizierter ethoxylierter Fettalkohol (Fa. Cognis)
**Disponil SDS 15:** Natriumlaurylsulfat (Fa. Cognis)

### Beispiel T1

Eine Tensidmischung wurde durch Mischen folgender Komponenten hergestellt: 45,5 g FA-30EO, 19,5 g Breox I, 35 g demineralisiertes Wasser. Der Aktivsubstanzgehalt der Mischung betrug 65 %.
Zur Prüfung des Schaumverhaltens wurde aus der wäßrigen Tensidmischungdurch Verdünnen mit NaCl-haltigem demineralisiertem Wasser eine Lösung mit einem Aktivsubstanzgehalt von 1 Gew.-% und einem Gehalt an NaCl von 0.05-Gew.% hergestellt. Diese Lösung wurde in einem Schaumtestgerät vom Typ "R-2000" (Fa. Sita) bei folgenden Parametern geprüft: Temperatur: 20°C; Rührzeit: 3 mal 10 Sekunden; Rührgeschwindigkeit: 1100 Umdrehungen pro Minute; gesamte Meßzeit: 20 Minuten; Zeitintervall der Messung: 10 Sekunden. Die nachfolgende Tabelle zeigt die Schaummenge (in mm) in Abhängigkeit von der Zeit (in Minuten):

| | | | | | | | | | | | |
|---|---|---|---|---|---|---|---|---|---|---|---|
| Zeit [min] | 0 | 2 | 4 | 6 | 8 | 10 | 12 | 14 | 16 | 18 | 20 |
| Schaum [mm] | 267 | 261 | 196 | 138 | 108 | 89 | 74 | 61 | 53 | 44 | 36 |

### Beispiel T2: Eine Tensidmischung wurde durch Mischen folgender Komponenten hergestellt: 45,5 g FA-30EO, 19,5 g Breox II, 35 g demineralisiertes Wasser. Der Aktivsubstanzgehalt der Mischung betrug 65 %.

Der Schaumtest wurde wie in Beispiel T1 beschrieben durchgeführt. Die nachfolgende Tabelle zeigt die erhaltenen Schaumwerte:

| | | | | | | | | | | | |
|---|---|---|---|---|---|---|---|---|---|---|---|
| Zeit [min] | 0 | 2 | 4 | 6 | 8 | 10 | 12 | 14 | 16 | 18 | 20 |
| Schaum [mm] | 245 | 242 | 223 | 173 | 138 | 113 | 102 | 90 | 78 | 72 | 65 |

### Vergleichsbeispiel T3: Ein Schaumtest mit Disponil A 3065 (65% Aktivsubstanzgehalt) wurde wie in Beispiel T1 beschrieben durchgeführt. Die nachfolgende Tabelle zeigt die erhaltenen Schaumwerte:

| | | | | | | | | | | | |
|---|---|---|---|---|---|---|---|---|---|---|---|
| Zeit [min] | 0 | 2 | 4 | 6 | 8 | 10 | 12 | 14 | 16 | 18 | 20 |
| Schaum [mm] | 257 | 253 | 251 | 248 | 247 | 244 | 241 | 239 | 237 | 235 | 234 |

### Beispiel L1: Unter Verwendung der Tensidmischung gemäß Beispiel T1 wurde eine Polymerdispersion (Latex) wie folgt hergestellt:

Der Polymerisationsreaktor wurde mit einem Gemisch aus 476,2 g demineralisiertem Wasser, 13,3 g Disponil SDS 15 und 0,5 g Kaliumperoxodisulfat (Gemisch 1) und 40 ml eines Gemisches aus 140,0 g Ethylacrylat, 140,0 g Methylmethacrylat, 52,5 g Butylacrylat und 17,5 g Acrylsäure (Gemisch 2) beschickt. Anschließend wurde für 15 Minuten mit Stickstoff gespült; der Stickstoffstrom wurde über die gesamte Reaktionsdauer aufrechterhalten. Der Reaktor wurde auf 80°C aufgeheizt. Bei Erreichen einer Temperatur von 70°C wurde innerhalb von 5 Minuten ein Gemisch aus 10,0 g der Tensidmischung gemäß Beispiel T1 (berechnet auf 100% Aktivsubstanz) und 50 g demineralisiertem Wasser (Gemisch 3) zugegeben. Danach wird der verbliebene Rest des Gemisches 2 sowie eine Lösung von 1,5 g Kaliumperoxodisulfat in 98,5 g demineralisiertem Wasser (Gemisch 4) innerhalb von 2 Stunden zudosiert. Nach beendeter Zugabe wurde 1 Stunde lang bei einer Temperatur von 83°C nachpolymerisiert, auf 30°C abgekühlt und mit Ammoniak ein pH-Wert von 8,5 eingestellt.

Für den Schaumtest wurde eine Lösung von 10% dieser Polymerdispersion in demineralisiertem Wasser hergestellt und analog Beispiel T1 vermessen. Die nachfolgende Tabelle zeigt die ermittelten Schaumwerte:

| | | | | | | | | | | | |
|---|---|---|---|---|---|---|---|---|---|---|---|
| Zeit [min] | 0 | 2 | 4 | 6 | 8 | 10 | 12 | 14 | 16 | 18 | 20 |
| Schaum [mm] | 173 | 92 | 58 | 37 | 25 | 19 | 12 | 9 | 7 | 6 | 5 |

### Vergleichsbeispiel L2: Eine Lösung von 10% Disponil AFX 3065 in demineralisiertem Wasser wurde analog Beispiel T1 vermessen. Die nachfolgende Tabelle zeigt die ermittelten Schaumwerte:

| | | | | | | | | | | | |
|---|---|---|---|---|---|---|---|---|---|---|---|
| Zeit [min] | 0 | 2 | 4 | 6 | 8 | 10 | 12 | 14 | 16 | 18 | 20 |
| Schaum [mm] | 220 | 214 | 211 | 206 | 204 | 199 | 197 | 193 | 191 | 187 | 181 |

### Eigenschaften der Latices

Der Einsatz der Emulgatoren gemäß den Beispielen T1 und T2 hatte keinerlei negative Auswirkungen auf die Eigenschaften der bei ihrem Einsatz in der Emulsionspolymerisation hergestellten Latices. Dies war unabhängig von der Natur der zur Polymerisation eingesetzten Monomeren - geprüft wurden insbesondere Acrylat-, Styrol/Acrylat und VeoVa-Monomer-Systeme.

Im übrigen wurde das oben näher beschriebene Schaumverhalten (siehe Beispiel L1 und Vergleichsbeispiel L2) auch beim Einsatz der erfindungsgemäß einzusetzenden Emulgatoren bei der Emulsionspolymerisation bestätigt. Während die Emulgatoren gemäß den Beispielen B1 und B2 ein ausgezeichnetes Schaumverhalten (mit raschem Abklingprofil) aufwiesen, wurde beim Einsatz des Emulgators Disponil A 3065 ein starkes Schäumen beobachtet, wobei der Schaum im Laufe der gesamten 20-minütigen Meßzeit auf in etwa konstantem hohem Niveau blieb.

Weiterhin wurde beobachtet, dass die unter Verwendung der erfindungsgemäßen Tensidmischungen hergestellten Polymerdispersionen eine erhöhte Scherstabilität aufweisen.

## Patentansprüche

1. Verwendung von nichtionischen Tensiden als Emulgatoren für die Emulsionspolymerisation, **dadurch gekennzeichnet, dass** man diese nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

2. Verfahren zur Herstellung wäßriger Latices durch Emulsionspolymerisation, wobei man als Emulgatoren ein oder mehrere Tenside einsetzt, die ausgewählt sind aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

3. Verfahren nach Anspruch 2, wobei man als Emulgatoren zusätzlich ein oder mehrere Tenside einsetzt, die ausgewählt sind aus der Gruppe
(c) der Verbindungen der Formel R¹-O-X-R², wobei X ein Segment bedeutet, das aus 1 bis 40 miteinander verknüpften Ethylen- und/oder Propylenoxideinheiten aufgebaut ist und worin die Reste R¹ und R² unabhängig voneinander Alkylreste mit 1 bis 20 C-Atomen bedeuten, die jeweils gesättigt oder ungesättigt, geradkettig oder verzweigt sein können, mit der Maßgabe, dass die Reste R¹ und R² keine Allylreste sind,
(d) der Verbindungen der Formel R³-O-X-H, wobei X ein Segment bedeutet, das aus 1 bis 40 miteinander verknüpften Ethylen- und/oder Propylenoxideinheiten aufgebaut ist und worin R³ einen Alkylrest mit 1 bis 20 C-Atomen bedeutet, der gesättigt oder ungesättigt, geradkettig oder verzweigt sein kann, mit der Maßgabe, dass R³ kein Allylrest ist, und
(e) der Verbindungen der Formel H-O-X-H, wobei X ein Segment bedeutet, das aus 1 bis 40 miteinander verknüpften Ethylen- und/oder Propylenoxideinheiten aufgebaut ist.

4. Verfahren nach Anspruch 2 oder 3, wobei wobei man als Emulgatoren zusätzlich ein oder mehrere Tenside einsetzt, die ausgewählt sind aus der Gruppe der anionischen und kationischen Tenside.

5. Verfahren nach einem der Ansprüche 2 bis 4, wobei man die Tenside aus den Gruppen (a) und (b) während der Emulsionspolymerisation einsetzt und/oder im Anschluß an die Emulsionspolymerisation den Latices zur Nachstabilisierung zudosiert.

6. Verfahren nach einem der Ansprüche 2 bis 5, wobei man die bei der Emulsionspolymerisation eingesetzten Monomeren auswählt aus der Gruppe Acrylsäure, Acrylsäureester, Butadien, Methacrylsäure, Methacrylsäureester, Styrol, Vinylacetat und Versaticsäurevinylester.

7. Polymerdispersionen, erhältlich nach dem Verfahren gemäß einem der Ansprüche 2 bis 6.
